# EUROPÄISCHE PATENTSCHRIFT

(11) **EP 2 066 008 B1**
(45) Veröffentlichungstag und Bekanntmachung des Hinweises auf die Patenterteilung: **03.08.2011**
(21) Anmeldenummer: 07023180.8
(22) Anmeldetag: 29.11.2007
(51) Int. Cl.: H02K 11/00, H02K 3/12

(54) **Stator einer dynamoelektrischen Maschine mit Mitteln zur Temperaturerfassung**
Stator for a dynamo-electric machine with temperature gauging instruments
Stator d'une machine dynamométrique doté de moyens d'enregistrement de la température

(43) Veröffentlichungstag der Anmeldung: 03.06.2009
(73) Patentinhaber: Siemens Aktiengesellschaft, 80333 München (DE)
(72) Erfinder: Heim, Bruno, 97633 Grosseibstadt (DE)

(56) Entgegenhaltungen:
- DE-U1- 20 107 523
- GB-A- 737 805
- US-A- 2 717 945
- US-A- 5 831 511
- US-A- 6 028 382

## Beschreibung

Die Erfindung betrifft den Stator einer dynamoelektrischen Maschine, mit einem Wicklungssystem, das in Nuten des Stators untergebracht ist, wobei Mittel zur Temperaturerfassung vorgesehen sind.

Statoren von dynamoelektrischen Maschinen weisen ein Wicklungssystem auf, um ein Magnetfeld zu erzeugen. Dieses Wicklungssystem ist in Nuten des Stators positioniert. Die Wicklungen des Wicklungssystems sind stromdurchflossen und aufgrund der Verluste in Windungen des Wicklungssystems stellt sich in den Nuten und damit letztendlich auch im Blechpaket des Stators eine erhöhte Temperatur im Stators und angrenzenden weiteren Betriebsmitteln ein. Durch an sich bekannt Kühlverfahren, wie Luft- oder Flüssigkeitskühlung, wird die Verlustwärme abtransportiert.

Falls dies nicht in ausreichendem Maße gelingt, verschlechtert sich das Betriebsverhalten der dynamoelektrischen Maschine, insbesondere kann es sogar zum Betriebsausfall führen. Um dies zu vermeiden, werden dynamoelektrische Maschinen Temperaturüberwacht, dabei werden Temperatursensoren am Blechpaket des Stators oder an den Wickelköpfen der in den Nuten des Stators angeordneten Wicklung der dynamoelektrischen Maschine angebracht.

Nachteilig dabei ist, dass letztlich die Temperatur im Stator, insbesondere zwischen den Spulenseiten der Wicklungssysteme in den Nuten des Stators nicht erfasst wird. Dabei ist zu berücksichtigen, dass an den Wicklungen verschiedenste Spannungspotentiale auftreten, die eine Anbringung eines Temperatursensors, mit notwendiger Spannungsfestigkeit erschweren. US 6 028 382 und US 2 717 945 offenbaren Temperatursensoren in Statornuten.

Ausgehend davon liegt der Erfindung die Aufgabe zugrunde, eine Temperaturerfassung bei einem Stator einer dynamoelektrischen Maschine zu schaffen, mit dem die Temperatur in zuverlässiger Art und Weise auch in den Nuten des Stators erfasst werden kann, wobei die Montage in einfacher Art und Weise auszuführen ist.

Die Lösung der gestellten Aufgabe gelingt erfindungsgemäβ durch einen Stator mit den Merkmalen des Anspruchs 1.

Durch die erfindungsgemäße Anordnung des Temperatursensors zwischen den Spulenseiten unterschiedlicher Spulen in einer Nut des Stators, insbesondere bei Spulenseiten von Zahnspulen in einer Nut, wird nunmehr der eigentliche Temperaturverlauf innerhalb der Nut im Wicklungssystem erfasst, ohne über Rechenmodelle, ausgehend von einer Wickelkopftemperatur oder von einer Blechpakettemperatur des Stators auf die eigentliche Temperatur rück schließen zu müssen.

Der Temperatursensor ist bei sämtlichen Motortypen immer an der gleichen Stelle in der Nut platziert, so dass auch immer an der vergleichbaren Messstelle die vergleichbare Temperatur erfasst und somit ein vergleichbares Temperaturverhalten der dynamoelektrischen Maschine direkt aufgenommen wird. Nachteilige Streuungen im Ansprechverhalten des Temperatursensors durch unterschiedliche Messstellen und/oder Temperaturankopplungen werden damit minimiert.

Der Temperatursensor befindet sich auf einem Trägerstreifen, der wiederum insbesondere als Phasentrenner ausgebildet ist, so dass eine Montage eines Phasentrenners in eine Nut letztlich nicht nur den Phasentrenner selbst sondern auch den Temperatursensor mit in die Nut einführt.

Da erfahrungsgemäß der Einbauraum in einer Nut sehr begrenzt ist, ist der Temperatursensor in einer weiteren vorteilhaften Ausgestaltung derart angeordnet, dass der Temperatursensor sich in einer Ausstanzung des Trägermaterials befindet und um seine Lage auf dem Trägerstreifen zu fixieren durch zumindest eine Lage eines Elektroisolierbandes, insbesondere eines Kaptonbandes geschaffen wird.

Dieses Elektroisolierband schafft oder unterstützt zumindest die Einhaltung der erforderlichen Spannungsfestigkeit zwischen den zwei Spulenseiten in einer Nut.

Die Lösung der gestellten Aufgabe gelingt auch durch ein erfindungsgemäβes Verfahren zur Herstellung eines Stators einer dynamoelektrischen Maschine mit den Merkmalen des Anspruch 6.

Nach der Imprägnierung des Stators der dynamoelektrischen Maschine ist der Temperatursensor durch die gesteckte Vorfixierung und die nunmehr durchgeführte Verklebung mit Imprägnierharz rüttelfest verankert und fixiert.

Vorteilhafterweise wird ein KTY84 als Temperatursensor verwendet.

Der Trägerstreifen, insbesondere in einer biegesteifen Ausführung ermöglicht auch eine einfache Steckmontage des Temperatursensors zwischen den Phasenzwischenlagen also einem beispielsweise zweischichtigen Phasentrenner, insbesondere bei Zahnspulen.

Die Stecktiefe wird durch den beidseitig aus dem Trägerstreifen überstehenden Temperatursensor begrenzt, so dass der Temperatursensor immer sehr einfach in der gleichen Lage sowohl radial, als auch axial zwischen den beiden Spulenseiten einer Nut befestigt wird.

Die Erfindung sowie weitere vorteilhafte Ausgestaltungen der Erfindung werden anhand eines besonders vorteilhaften Ausgestaltungsbeispiels näher erläutert. Dabei zeigen:
- FIG 1: eine prinzipielle Darstellung eines Wicklungssystems in perspektivischer Darstellung eines Stators,
- FIG 2: dem prinzipiellen Aufbau eines Temperatursensors auf seinen Trägerstreifen.

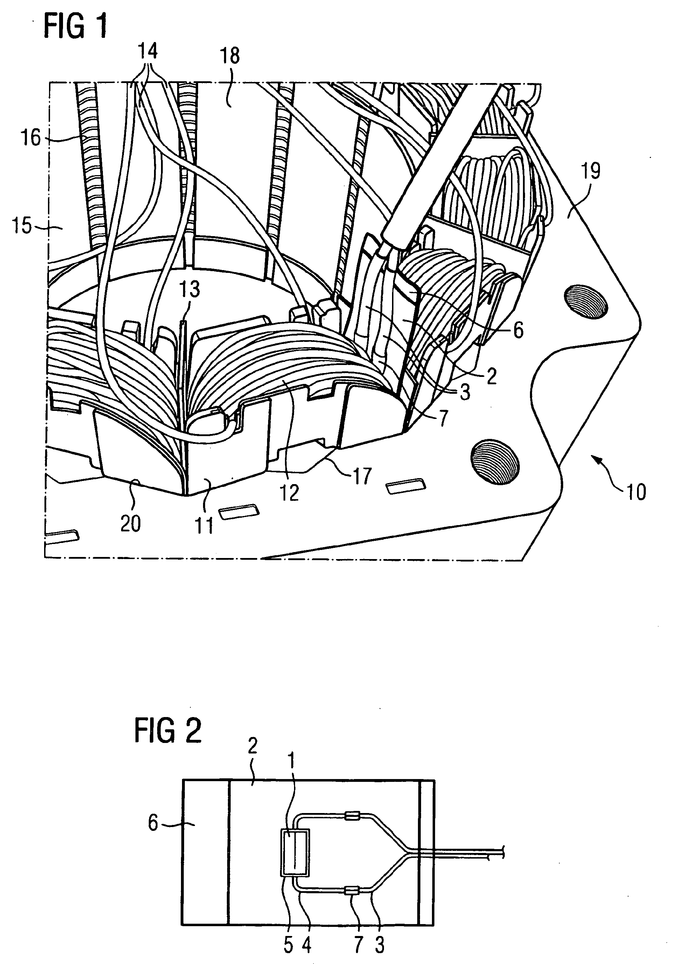

FIG 1 zeigt in perspektivischer Darstellung eine Teilansicht eines Stators 10 mit einem Wicklungssystem, das durch Zahnspulen 12 gebildet wird. Die Erfindung selbst kann selbstverständlich auch bei anderen Wicklungssystemen, wie verteilten Wicklungssystemen oder gesehnten Wicklungssystemen eingesetzt werden.

Der Stator 10 ist zweiteilig aufgebaut, d.h. der Stator 10 weist einen Jochrücken 19 auf, in den ein geblechter Stern eingesetzt wird, dessen Zähne aus Zahnschäften 17 und Zahnköpfen 18 bestehen. Jeder Zahn ist aus Einzelblechen 15 aufgebaut, wobei jedoch jedes x-te Blech, insbesondere jedes fünfte Blech einen durchgehenden Steg aufweist, so dass in Umfangsrichtung betrachtet, ein im Bereich der Zahnköpfe 18 zusammenhängendes Blech 16 vorliegt. Dies stabilisiert den Stern bei der weiteren Verarbeitung und reicht aus, die Nutstreuung im Vergleich zu komplett geschlossenen Nuten 20 zu verringern.

Bei axialer Betrachtung des sternförmigen Aufbaus, liegt also eine vorgebbare Abfolge von Einzelblechen und über die Nuten 20 geschlossenen Blechen vor.

Die Zahnspulen 12, die vorteilhafterweise auf Spulenkörpern 11 angeordnet sind, werden radial von außen auf den Stern gesteckt. Anschließend kann der Stern in seinen Jochrücken 19 axial eingesetzt werden und vergossen werden.

Dabei bilden nun die Wicklungssysteme der Zahnspule 12 an den Stirnseiten des Stators 10 Wickelköpfe. Pro Nut 20 des Stators 19 sind zwei Spulenseiten unterschiedlicher Zahnspulen 12 vorhanden. Zwischen diesen Spulenseiten in einer Nut 20 besteht ein Spannungspotential, so dass dazwischen ein Phasentrenner 13 notwendig ist.

Zwar können auch die Wicklungsdrähte der jeweiligen Zahnspulen 12 eine dickere Isolation aufweisen, so dass nicht notwendigerweise ein Phasentrenner eingesetzt werden muss, dies reduziert jedoch gegebenenfalls den Kupferfüllfaktor der Nut und vergrößert den Wickelkopf.

In diesen Bauraum wird nunmehr in vorteilhafter Weise gemäß der Erfindung ein Trägerstreifen 6 eingeschoben, der einen Temperatursensor 1 aufweist und der entweder zwischen den Phasentrennern 13 einer Nut 20 oder direkt zwischen den Spulenseiten der Spulen, insbesondere der Zahnspulen 12 platziert ist.

Vorteilhafterweise weist bereits ein Phasentrenner 13 einen derartigen Temperatursensor 1 auf, wobei als Trägerstreifen 6 dann der Phasentrenner 13 selbst vorgesehen ist. Der Temperatursensor 1 kann zusätzlich durch Elektroisolierbänder 2 gegenüber den vorhandenen Spannungspotentialen abgedeckt werden. Der Temperatursensor 1 ist über einen Anschlussdraht 4 und über Anschlusslitzen 3 nach außen verbunden, um so seine Temperaturinformation weiterleiten zu können.

Ebenso kann der Temperatursensor 1 auch zwischen zwei Trägerstreifen 6 positioniert werden, insbesondere im Bereich einer Ausstanzung 5, wie unten detaillierter beschreiben.

Als Temperatursensor 1 ist vorteilhafterweise ein KTY84 vorgesehen.

In einer vorteilhaften Ausgestaltung, insbesondere um den Bauraum weiter zu optimieren, ist der Temperatursensor 1 in einer Ausstanzung 5 des Trägerstreifens 6 vorgesehen, um somit den Einbauraum weiter zu optimieren. Durch diese Ausstanzung 5 setzt der Temperatursensor 1 vorfixiert auf dem Trägerstreifen 6 immer an der gleichen Stelle. Isoliert und gleichzeitig fixiert wird der Temperatursensor 1 mit einer oder mehrerer Lagen eines temperaturbeständigen Elektroisolierbandes 2. Der insbesondere biegesteife Trägerstreifen 6 ermöglicht nun eine einfache Steckmontage des Temperatursensors 1 zwischen den Spulenseiten einer Nut 20 und/oder zwischen Phasentrennern 13 der benachbarten Spulenseiten der Zahnspulen 12 in einer Nut 20.

Die Stecktiefe wird durch den beidseitig aus dem Trägerstreifen 6 oder Trägerplättchen ragenden Körper, insbesondere Glaskörper ragenden Temperatursensor 1 begrenzt. Insbesondere bei in einer Nut 20 benachbarten Zahnspulen 12 bilden an der Stirnseite des Stators 10, also am Übergang von der rundlichen Stirnseite der Wickelköpfe der Zahnspulen 12 in die gerade Spulenseite, die sich in der Nut befindet einen Spalt, der sich auf der geraden Spulenseiten so stark verjüngt, dass der, insbesondere ca. 1,4 mm dicke Körper des Temperatursensors 1 immer an der gleichen Stelle klemmt. Der Trägerstreifen 6 klemmt zwischen den Spulenlängsseiten, indem der beidseitig überstehende Körper des Temperatursensors 1 sich an den beiden in einer Nut 20 befindlichen Zahnspulen abstützt.

Somit kann der Temperatursensor 1 immer an der vorgesehenen Stelle zwischen den beiden Spulenseiten befestigt werden. Die Befestigung dient insbesondere der Vormontage und wird durch die zusätzliche Imprägnierung des Stators 10 weiter fixiert und positioniert. Damit ist der Temperatursensor 1 rüttelfest sehr nahe an der entscheidenden Wärmequelle positioniert, so dass nicht durch umständlich Umrechnungsmethode auf die eigentlich relevante Temperatur innerhalb der Wicklung in der Nut 20 geschlossen werden muss.

Falls der Trägerstreifen 6 zwischen Phasentrennern 13 positioniert ist, ist es ausreichend wenn die Länge des Trägerstreifens 6 einen Teil der axialen Länge des Stators 10 einnimmt.

Falls jedoch der Temperatursensor 1 in einem Phasentrenner 13 angeordnet und ggf. durch Elektroisolierband 2 abgedeckt ist, muss der Phasentrenner 13 mindestens die axiale Länge des Stators 10 aufweisen, um die ausreichende Spannungsfestigkeit zwischen den Spulenseiten einer Nut 20 aufweisen zu können.

Vorteilhafterweise erfasst nunmehr der Temperatursensor 1 die Temperatur zweier Spulen in einer Nut 20. Somit wird, insbesondere bei einer unsymmetrischen Belastung der dynamoelektrischen Maschine, wenn Spulenseiten unterschiedlicher Phase in einer Nut 20 angeordnet sind eine ausreichende Temperaturüberwachung gewährleistet.

Der Temperatursensor 1 mit seinen Anschlussdrähten 4 ist über eine Kontaktierung 7 mit den Anschlusslitzen 3 verbunden. Diese Anschlusslitzen 3 führen beispielsweise mit anderen Temperatursensoren der dynamoelektrischen Maschine oder Oberwachungssensoren für Schwingungen, etc. über einen Multiplexer an ein Anzeige- oder Überwachungseinheit, das abhängig von den übermittelten Informationen auch eine Abschaltung der dynamoelektrischen Maschine einleiten kann.

## Patentansprüche

1. Stator (10) einer dynamoelektrischen Maschine mit einem Wicklungssystem, insbesondere Zahnspulen (12), das in Nuten (20) des Stators (10) positioniert ist, wobei sich pro Nut (20) unterschiedliche Seiten von Spulen befinden, wobei an den Stirnseiten des Stators (10) Wickelköpfe ausgebildet sind, und wobei zumindest ein Temperatursensor (1) zwischen den in einer Nut (20) befindlichen Spulenseiten eingesteckt ist, **dadurch gekennzeichnet, dass** die Stecktiefe durch den beidseitig aus dem Trägerstreifen (6) oder Trägerplättchen ragenden Körper des Temperatursensors (1) begrenzt ist, und so der Temperatursensor (1) eingeklemmt ist.

2. Stator (10) nach Anspruch 1, **dadurch gekennzeichnet, dass** der
Körper als Glaskörper ausgeführt ist.

3. Stator (10) nach Anspruch 1, **dadurch gekennzeichnet, dass** der Trägerstreifen (6) einen Phasentrenner zwischen den Spulenseiten der Nut (20) bildet.

4. Stator (10) nach Anspruch 1 oder 3, **dadurch gekennzeichnet, dass** der Temperatursensor (1) in eine dem Temperatursensor (1) entsprechende Ausstanzung (5) des Trägerstreifens (6) eingesetzt ist.

5. Stator (10) nach einem der vorhergehenden Ansprüche, **dadurch gekennzeichnet, dass** die Lage des Temperatursensors (1) durch zumindest eine Lage eines Elektroisolierbandes (2), insbesondere eines Kaptonbandes fixiert ist.

6. Verfahren zur Herstellung eines Stators (10) einer dynamoelektrischen Maschine nach einem der vorhergehenden Ansprüche durch folgende Schritte
- Stanzpaketieren des Blechpakets des Stators (10),
- Einsetzen der Wicklung, insbesondere von Zahnspulen (12) oder einer klassischen Wicklung,
- axiales Einstecken eines auf einem Trägerstreifen (6) oder Trägerplättchen befindlichen Temperatursensors (1) zwischen die Spulenseiten einer Nut (20) des Stators (10) bis die Stecktiefe durch den beidseitig aus dem Trägerstreifen (6) oder Trägerplättchen ragenden Körper des Temperatursensors (1) begrenzt wird,
- Imprägnierung des Stators (10).

7. Verfahren zur Herstellung eines Stators (10) nach Anspruch 6, **dadurch gekennzeichnet,**
**dass** vor dem axialen Einstecken das Einsetzen von Phasentrennern (13) zwischen unterschiedliche Spulenseiten einer Nut (20) erfolgt.

## Claims

1. Stator (10) for a dynamoelectrical machine having a winding system, in particular tooth-wound coils (12), which is positioned in slots (20) in the stator (10) with different sides of coils being located in each slot (20), with end windings being formed on the end faces of the stator (10), and with at least one temperature sensor (1) being inserted between the coil sides which are located in a slot (20), **characterized in that** the insertion depth is limited by the body of the temperature sensor (1) which projects on both sides out of the mounting strip (6) or mounting platelet, and the temperature sensor (1) being thus clamped.

2. Stator (10) according to Claim 1, **characterized in that** the body is in the form of a glass body.

3. Stator (10) according to Claim 1, **characterized in that** the mounting strip (6) forms a phase separator between the coil sides of the slot (20).

4. Stator (10) according to Claim 1 or 3, **characterized in that** the temperature sensor (1) is inserted into a stamped-out area (5), which corresponds to the temperature sensor (1), in the mounting strip (6).

5. Stator (10) according to one of the preceding claims, **characterized in that** the position of the temperature sensor (1) is fixed by at least one layer of an electrical insulating tape (2), in particular a Kapton tape.

6. Method for production of a stator (10) of a dynamoelectrical machine according to one of the preceding claims, by the following steps:
- stamped-packeting of the laminated core of the stator (10),
- insertion of the winding, in particular of tooth-wound coils (12) or a classical winding,
- axial insertion of a temperature sensor (1), which is located on a mounting strip (6) or a mounting platelet, between the coil sides in a slot (20) in the stator (10) until the insertion depth is limited by the body of the temperature sensor (1) which projects on both sides out of the mounting strip (6) or mounting platelet,
- impregnation of the stator (10).

7. Method for production of a stator (10) according to Claim 6, **characterized in that**
the insertion of phase separators (13) between different coil sides in a slot (20) takes place before the axial insertion.

## Revendications

1. Stator ( 10 ) d'une machine dynamoélectrique, comprenant un système d'enroulement, notamment des bobines ( 12 ) dentées, qui sont placées dans des encoches ( 20 ) du stator ( 10 ) des côtés différents de bobines se trouvant dans chaque encoche ( 20 ), des têtes d'enroulement étant formées sur les côtés frontaux du stator ( 10 ) et au moins un capteur ( 1 ) de température étant enfiché entre des côtés de bobines se trouvant dans une encoche ( 20 ), **caractérisé en ce que** la profondeur d'enfichage est limitée par le corps du capteur ( 1 ) de température faisant saillie des deux côtés de la bande ( 6 ) de support ou de la plaquette de support et ainsi le capteur ( 1 ) de température est coincé.

2. Stator ( 10 ) suivant la revendication 1, **caractérisé en ce que** le corps est réalisé sous la forme d'un corps en verre.

3. Stator ( 10 ) suivant la revendication 1, **caractérisé en ce que** la bande ( 6 ) de support forme un séparateur de phase entre les côtés de bobines de l'encoche ( 20 ).

4. Stator (10) suivant la revendication 1 ou 3, **caractérisé en ce que** le capteur ( 1 ) de température est inséré dans une découpe ( 5 ) de la bande ( 6 ) de support correspondant au capteur ( 1 ) de température.

5. Stator ( 10 ) suivant l'une des revendications précédentes, **caractérisé en ce que** la position du capteur ( 1 ) de température est fixée par au moins une position d'une bande ( 2 ) isolante du point de vue électrique, notamment d'une bande en kapton.

6. Procédé de fabrication d'un stator ( 10 ) d'une machine dynamoélectrique suivant l'une des revendications précédentes par les stades suivants
- paquetage par estampage du paquet de tôles du stator ( 10 ),
- insertion de l'enroulement, notamment de bobines (12 ) dentées ou d'un enroulement classique,
- enfichage axial d'un capteur ( 1 ) de température se trouvant sur une bande (6) de support ou sur une plaquette de support entre les côtés de bobines d'une encoche ( 20 ) du stator ( 10 ) jusqu'à ce que la profondeur d'enfichage soit limitée par le corps du capteur ( 1 ) de température en saillie des deux côtés de la bande ( 6 ) de support ou de la plaquette de support,
- imprégnation du stator ( 10 ).

7. Procédé de fabrication d'un stator ( 10 ) suivant la revendication 6, **caractérisé en ce qu'**on effectue avant l'enfichage axial l'insertion de séparateurs ( 13 ) de phase entre des côtés de bobines différents d'une encoche ( 20 ).
